# FASCICULE DE BREVET EUROPEEN

(11) **EP 0 989 649 B1**
(45) Date de publication et mention de la délivrance du brevet: **29.11.2006**
(21) Numéro de dépôt: 99402290.3
(22) Date de dépôt: 20.09.1999
(51) Int. Cl.: H02B 1/04

(54) **Support pour apparaillage électrique**
Trägervorrichtung für elektrische Geräte
Carrier for electrical apparatus

(30) Priorité: 22.09.1998 FR 9811806
(43) Date de publication de la demande: 29.03.2000
(73) Titulaire: LEGRAND, 87000 Limoges (FR); LEGRAND SNC, 87000 Limoges (FR)
(72) Inventeur: Combas, Christian, 87240 Ambazac (FR); Guelin, Jacques, 87000 Limoges (FR)
(74) Mandataire: Santarelli

(56) Documents cités:
- EP-A- 0 028 553
- US-A- 3 832 604

## Description

La présente invention concerne d'une manière générale les supports pour appareillage électrique, du genre comportant une embase, un châssis, qui est rapporté de manière amovible sur l'embase, et qui est propre à recevoir un appareillage électrique, et au moins un bornier, qui, solidaire, directement ou indirectement, de l'embase, est destiné à constituer une interface de câblage pour un tel appareillage électrique. (voir EP-A-0 028 553 et US-A-3 832 604).

Un tel support peut par exemple appartenir à une quelconque enveloppe, telle que coffret ou armoire, en constituant alors le fond de celle-ci.

Il suffit qu'il lui soit rapporté, en façade, un quelconque capot, qu'il s'agisse d'un capot fixe ou d'un capot ouvrant.

A ce jour, le ou les borniers sont usuellement directement rapportés sur l'embase, la partie du câblage intervenant entre les divers appareils constituant l'appareillage concerné pouvant se faire en atelier, et la partie du câblage intervenant entre ces appareils et le ou les borniers étant effectuée in situ.

Cette disposition a donné et peut encore donner lieu à satisfaction.

Mais elle rend difficile une intervention ultérieure sur l'appareillage concerné, lorsque, par exemple, cet appareillage doit être modifié.

En effet, en raison même de la partie du câblage intervenant entre les appareils électriques concernés et le ou les borniers correspondants, il est impossible, sans intervenir sur cette partie du câblage, de procéder à une dépose du châssis portant ces appareils électriques, alors même qu'une telle dépose est le plus souvent souhaitable pour faciliter l'opération à effectuer sur eux.

La présente invention a d'une manière générale pour objet une disposition permettant au contraire une telle dépose lorsque celle-ci est désirée.

De manière plus précise, elle a pour objet un support pour appareillage électrique du genre comportant une embase, un châssis, qui est rapporté de manière amovible sur l'embase, et qui est propre à recevoir un appareillage électrique, et au moins un bornier, qui, solidaire, directement ou indirectement, de l'embase, est destiné à constituer une interface de câblage pour un tel appareillage électrique, ce support étant d'une manière générale caractérisé en ce que le bornier est rapporté sur au moins un support de bornier, qui est inséré entre le châssis et l'embase, et en ce que des moyens de fixation sont prévus pour permettre, au choix, d'assujettir ce support de bornier au châssis, ou de l'assujettir à l'embase.

Ainsi, suivant une première configuration possible, le ou les borniers sont solidaires du châssis, en n'étant solidaires de l'embase que par l'intermédiaire de celui-ci, et, lorsque le châssis est déposé de l'embase, il entraîne avec lui ce ou ces borniers, sans qu'il soit nécessaire d'intervenir sur la partie du câblage éventuellement précédemment établie entre ce ou ces borniers et les appareils électriques concernés.

Mais, suivant une deuxième configuration possible, le ou les borniers peuvent, si désiré, être, de manière traditionnelle, directement solidaires de l'embase, en sorte que, lorsque le châssis est déposé de cette embase, ce ou ces borniers demeurent en place sur cette dernière.

En outre, le passage de l'une à l'autre de ces configurations est avantageusement réversible.

N'impliquant, en pratique, qu'une intervention sur un nombre limité d'organes de fixation, par exemple de simples vis, ce passage est de surcroît particulièrement facile et rapide à exécuter.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un support suivant l'invention, pour une première configuration de celui-ci ;
la figure 2 reprend, à échelle supérieure, le détail de ce support repéré par un encart II sur la figure 1 ;
la figure 3 en est, à échelle encore supérieure, une vue partielle en coupe longitudinale, suivant la ligne III-III de la figure 2 ;
la figure 4 est, avec un arrachement local, une vue en perspective d'un des supports de bornier mis en oeuvre dans le support suivant l'invention, représenté isolément ;
la figure 5 est une vue partielle en perspective d'un des longerons que comporte le châssis également mis en oeuvre dans le support suivant l'invention ;
la figure 6 est, à échelle différente, une vue partielle en perspective qui, déduite de celle de la figure 1, illustre la dépose de ce châssis pour cette première configuration du support suivant l'invention ;
la figure 7 reprend, à échelle supérieure, le détail de l'embase de ce support repéré par un encart VII sur la figure 6 ;
les figures 8 et 9 sont des vues qui, respectivement analogues à celles des figures 2 et 3, se rapportent à une deuxième configuration possible pour le support suivant l'invention ;
la figure 10 est une vue partielle en perspective qui, à la manière de celle de la figure 6, illustre la dépose du châssis pour cette deuxième configuration du support suivant l'invention.

Tel qu'illustré sur ces figures, et de manière connue en soi, le support 10 suivant l'invention comporte, globalement, une embase 11, un châssis 12, qui est rapporté de manière amovible sur l'embase 11, et qui est propre à recevoir un appareillage électrique non représenté, et au moins un bornier 13, qui, solidaire, directement ou indirectement, de l'embase 11, suivant des dispositions décrites plus en détail ultérieurement, est destiné à constituer une interface de câblage pour un tel appareillage électrique.

Dans la forme de réalisation représentée, l'embase 11 est en forme générale de bac, et elle est globalement parallélépipédique.

Elle comporte, donc, un fond 14, deux panneaux de côté longitudinaux 15, et, en alternance avec ceux-ci, deux panneaux de côté transversaux 16.

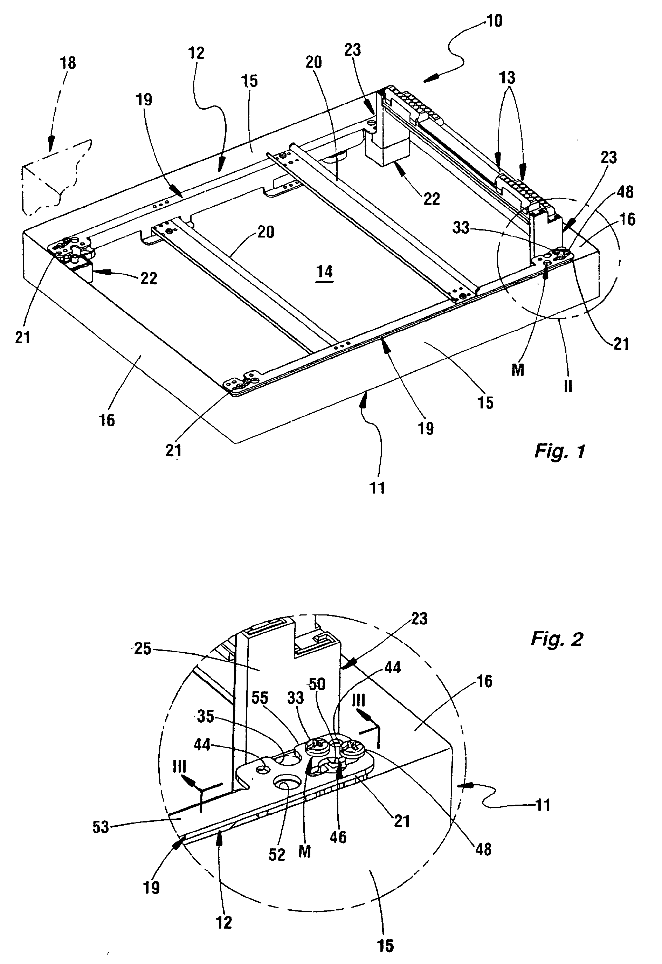

Si désiré, et tel que schématisé, en partie, en traits interrompus, sur la figure 1, il peut lui être associé un capot 18, l'ensemble constituant alors une enveloppe, telle que par exemple un coffret ou une armoire.

De manière également connue en soi, le châssis 12 comporte deux longerons 19 reliés l'un à l'autre par au moins une traverse 20.

Parallèles l'un à l'autre, les longerons 19 sont parallèles aux panneaux de côté longitudinaux 15 de l'embase 11.

Dans la forme de réalisation représentée, deux traverses 20 sont prévues, à distance l'une de l'autre, et à distance, chacune, d'une des extrémités 21 des longerons 19.

Elles s'étendent parallèlement aux panneaux de côté transversaux 16 de l'embase 11.

De telles traverses 20 étant bien connues par elles-mêmes, et ne relevant pas de la présente invention, elles ne seront pas décrites ici.

Il suffira d'indiquer qu'elles sont aptes à recevoir, côte à côte, par exemple par simple encliquetage, les appareils électriques constituant l'appareillage concerné.

Dans la forme de réalisation représentée, et suivant des dispositions décrites plus en détail ultérieurement, le châssis 12 est rapporté, par les extrémités 21 de ses longerons 19, sur des plots 22, qui, d'un seul tenant avec l'embase 11, font saillie sur le fond 14 de celle-ci, dans les zones d'angle de ce fond 14.

Dans la forme de réalisation représentée, enfin, deux borniers 13, au moins, sont prévus en parallèle, parallèlement à l'un des panneaux de côté transversaux 1 6 de l'embase 11.

Suivant l'invention, un tel bornier 13 est rapporté sur au moins un support de bornier 23, qui, suivant des dispositions décrites plus en détail ultérieurement, est inséré entre le châssis 12 et l'embase 11, et des moyens de fixation M sont prévus pour permettre, au choix, d'assujettir ce support de bornier 23 au châssis 12, ou de l'assujettir à l'embase 11.

En pratique, et tel que représenté, il y a un support de bornier 23 à chacune des extrémités du ou des borniers 13.

Dans la forme de réalisation représentée, ce support de bornier 23 comporte une patte 24, sur laquelle intervient le châssis 12, et un pilier 25, qui est propre à recevoir au moins un bornier 13.

En pratique, et tel que représenté, la patte 24 s'étend en équerre par rapport au pilier 25, à la base de celui-ci.

En pratique, également, le pilier 25 est apte à recevoir au moins deux borniers 13.

Par exemple, et tel que représenté, seuls deux borniers 13 sont prévus.

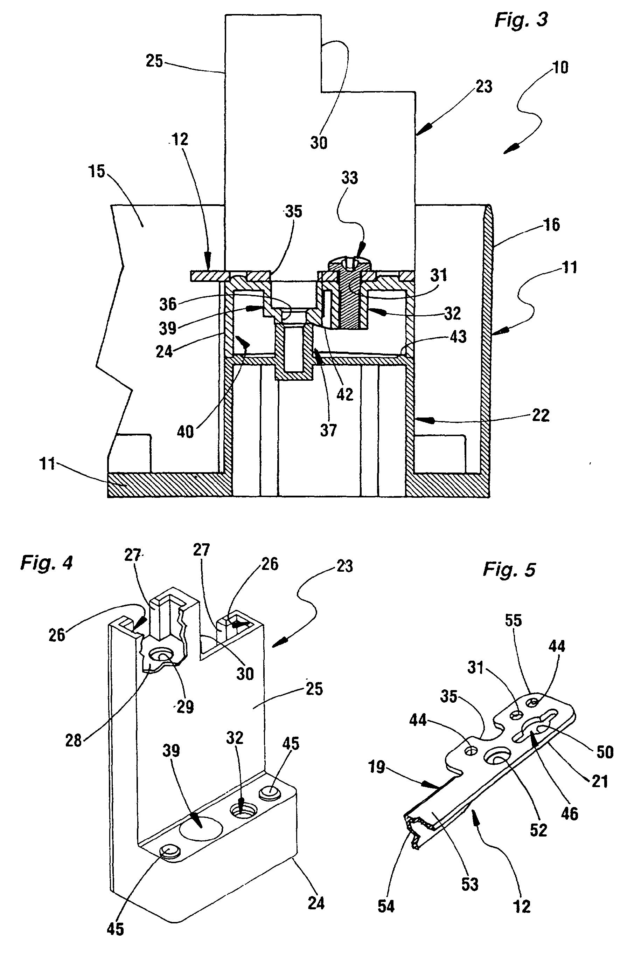

Le pilier 25 du support de bornier 23 suivant l'invention comporte, côte à côte, pour ce faire, à son extrémité supérieure, figure 4, deux logements 26, qui, pour un montage du type montage en queue d'aronde, sont chacun ouverts latéralement par une fente 27, et dont le fond 28 présente un perçage 29, pour l'intervention d'un quelconque organe de fixation, une vis par exemple, propre à assurer un assujettissement du bornier 13 correspondant.

Dans la forme de réalisation représentée, ceux deux logements 26 interviennent en escalier, en étant séparés l'un de l'autre par un décrochement 30, en sorte que les deux borniers 13 sont eux-mêmes étagés.

En pratique, les deux supports de bornier 23 ainsi prévus aux extrémités des borniers 13 sont disposés dos à dos, avec leur patte 24 dirigée vers le panneau de côté longitudinal 15 de l'embase 11 le plus proche.

Pour chacun des supports de bornier 23, les moyens de fixation M suivant l'invention comportent, dans la forme de réalisation représentée, en correspondance l'un avec l'autre, sur le châssis 12, un perçage 31, et, sur le support de bornier 23, une cheminée 32, pour l'implantation éventuelle d'un organe de fixation 33, par exemple une simple vis, qui, prenant appui sur le châssis 12, tel que représenté sur les figures 1 à 3, permet d'assujettir ce support de bornier 23 à ce châssis 12.

En pratique, le perçage 31 du châssis 12 est établi à l'extrémité correspondante du longeron 19 concerné de celui-ci.

Corollairement, la cheminée 32 du support de bornier 23 concerne la patte 24 de celui-ci, et s'étend sensiblement parallèlement à son pilier 25.

Dans la forme de réalisation représentée, les moyens de fixation M comportent, encore, en correspondance, successivement, les uns avec les autres, sur le châssis 12, un évidement 35, sur le support de bornier 23, un perçage 36, et, sur l'embase 11, une cheminée 37, pour l'implantation éventuelle d'un organe de fixation 38, par exemple une simple vis, qui, traversant librement le châssis 12 et prenant appui sur le support de bornier 23, permet d'assujettir ce support de bornier 23 à l'embase 11.

Comme précédemment, l'évidement 35 du châssis 12 est, en pratique, établi à l'extrémité 21 correspondante du longeron 19 concerné de ce châssis 12.

Dans la forme de réalisation représentée, cet évidement 35, qui doit être assez large pour un libre passage de l'organe de fixation 38, est ouvert latéralement, à la manière d'une encoche.

Corollairement, le perçage 36 du support de bornier 23 concerne, lui aussi, comme précédemment, la patte 24 de ce support de bornier 23.

Dans la forme de réalisation représentée, ce perçage 36 intervient au fond d'un puits 39.

Corollairement, également, la cheminée 37 est établie sur le plot 22 correspondant de l'embase 11.

Dans la forme de réalisation représentée, la patte 24 du support de bornier 23 est largement allégée, intérieurement, par un évidement 40, en forme de cloche.

La cheminée 32 et le puits 39 s'étendent, à mi-hauteur, dans cet évidement 40, et, corollairement, pour rejoindre le puits 39, la cheminée 37 de l'embase 11 fait saillie sur la surface supérieure de son plot 22.

Mais, la cheminée 32 du support de bornier 23 ayant une hauteur supérieure à celle de son puits 39, une nervure oblique 42, qui rejoint le puits 39, et, plus précisément, le fond de celui-ci dans lequel est ménagé le perçage 36, est adossée à la cheminée 32, pour le guidage du support de bornier 23 lors de la mise en place de celui-ci sur le plot 22 de l'embase 11.

Cette mise en place se trouve ainsi facilitée, en évitant une butée contre la cheminée 32.

Préférentiellement, d'ailleurs, et cela est le cas dans la forme de réalisation représentée, des moyens de centrage sont prévus entre le support de bornier 23 et l'embase 11, pour faciliter encore cette mise en place.

En pratique, ces moyens de centrage comportent, d'une part, sur le support de bornier 23, l'évidement 40 qui allège sa patte 24, et, d'autre part, sur l'embase 11, et, plus précisément, sur le plot 22 correspondant de celle-ci, une collerette 43, qui fait saillie sur la surface supérieure de ce plot 22, en retrait par rapport à sa périphérie, et sur laquelle le support de bornier 23 peut être emboîté par son évidement 40.

De même, des moyens d'indexation sont préférentiellement prévus entre le châssis 12 et le support de bornier 23.

Dans la forme de réalisation représentée, ces moyens d'indexation comportent, d'une part, sur le châssis 12, au moins un trou 44, et, d'autre part, sur le support de bornier 23, au moins un ergot 45 sur lequel le châssis 12 peut être engagé par son trou 44.

En pratique, dans la forme de réalisation représentée, le châssis 12 comporte, à distance l'un de l'autre, deux trous 44, et le support de bornier 23 présente, en correspondance, à distance l'un de l'autre, deux ergots 45.

Les trous 44 du châssis 12 sont établis, comme précédemment, à l'extrémité 21 correspondante du longeron 19 concerné de ce châssis 12.

Ils sont sensiblement alignés avec le perçage 31 et l'évidement 35 déjà présents sur une telle extrémité 21, en étant établis, l'un, à l'une des extrémité de l'alignement correspondant, et, l'autre, à l'autre des extrémités de cet alignement.

De même, les ergots 45 du support de bornier 23 font saillie sur la surface supérieure de la patte 24 de celui-ci, en étant alignés avec la cheminée 32 et le puits 39 correspondants.

Dans la forme de réalisation représentée, le châssis 12 présente, encore, au moins une lumière 46, qui, établie en correspondance avec une cheminée 47 de l'embase 11, permet le passage d'un organe de fixation 48, par exemple une simple vis, apte à assurer son assujettissement à cette embase 11.

En pratique, il est prévu une lumière 46 à chacune des extrémités 21 de chacun des longerons 19 du châssis 12, et celle-ci est décalée transversalement par rapport à l'alignement formé par le perçage 31, par l'évidement 35 et par les trous 44 déjà présents à une telle extrémité 21.

Dans la forme de réalisation représentée, cette lumière 46 est allongée en boutonnière, parallèlement à l'alignement précédent, et elle présente, localement, dans sa zone médiane, un élargissement 50 ayant transversalement une dimension supérieure à celle de l'organe de fixation 48 associé, pour un libre passage, à cet endroit, de celui-ci.

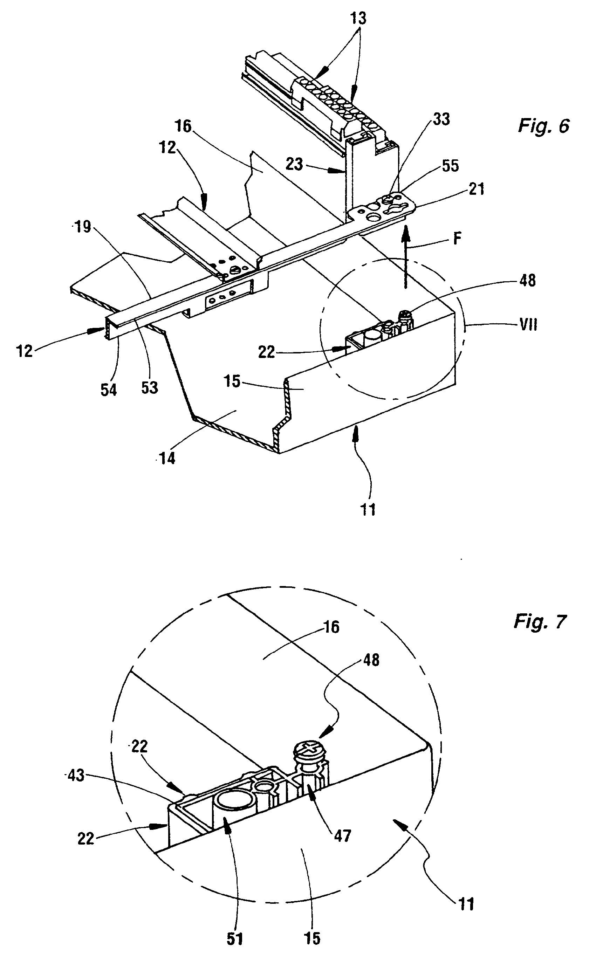

Corollairement, la cheminée 47 fait saillie sur le plot 22 correspondant de l'embase 11, figure 7, entre la collerette 43 de ce plot 22 et le panneau de côté longitudinal 15 correspondant.

Pour coopération avec un organe de fixation, non représenté, par exemple une simple vis, propre à assujettir à l'embase 11 le capot 18 éventuellement associé à celle-ci, chacun des plots 22 de cette embase 11 comporte, enfin, entre la collerette 43 et le panneau de côté longitudinal 15 correspondant, à distance de la cheminée 47 précédente, une autre cheminée 51, et, en correspondance, le châssis 12 comporte, à chacune des extrémités 21 de chacun de ses longerons 19, un évidement 52, dans l'alignement de la lumière 46 déjà présente à une telle extrémité 21.

En pratique, cet évidement 52 a un contour circulaire.

En pratique, également, chacun des longerons 19 du châssis 12 est agencé de manière identique à chacune de ses extrémités 21, l'agencement correspondant comportant, suivant les dispositions décrites précédemment, un perçage 31, un évidement 35, deux trous 44, une lumière 46 et un évidement 52, figure 5.

Dans la forme de réalisation représentée, ces longerons 19 ont, pour l'essentiel, une forme de cornière, avec une aile 53 parallèle au fond 14 de l'embase 11, et une aile 54 perpendiculaire à ce fond 14.

La lumière 46 et l'évidement 52 sont directement établis sur l'aile 53.

Le perçage 31, l'évidement 35 et les trous 44 sont établis sur une patte 55, qui, prolongeant localement l'aile 53, à niveau avec celle-ci, s'étend en direction du longeron 19 opposé.

Lorsque, comme représenté sur les figures 1 à 3, un assujettissement des deux supports de bornier 23 au châssis 12 est souhaité, il est mis en oeuvre un organe de fixation 33 pour chacun de ces supports de bornier 23, tel que représenté pour l'un d'eux sur la figure 3.

Corollairement, et ainsi qu'il est visible sur les figures 1 et 2, il est également mis en oeuvre un organe de fixation 48 à chacune des extrémités 21 de chacun des longerons 19 du châssis 12, pour l'assujettissement de ce châssis 12 à l'embase 11.

Si une dépose du châssis 12 est souhaitée, les vis constituants les organes de fixation 48 sont légèrement desserrées, comme représenté sur la figure 2.

Il suffit, dès lors, de faire coulisser légèrement le châssis 12 parallèlement à son plan pour que, l'élargissement 50 des lumières 46 correspondantes arrivant à niveau avec la tête de ces vis, le châssis 12 puisse être dégagé de celles-ci, tel que schématisé par la flèche F sur la figure 6.

Le châssis 12 entraîne alors avec lui les supports de bornier 23, et, donc, les borniers 13 portés par ceux-ci.

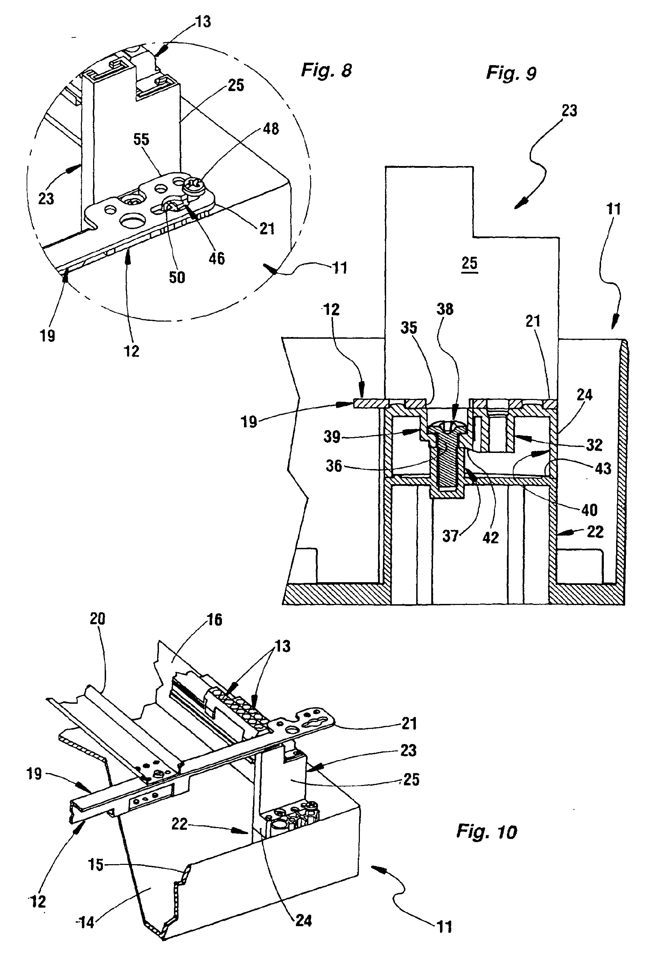

Lorsque, comme représenté sur les figures 8 et 9, un assujettissement des supports de bornier 23 à l'embase 11 est souhaité, c'est l'organe de fixation 38 correspondant qui, pour ces supports de bornier 23, est mis en oeuvre, comme représenté pour l'un d'eux sur la figure 9.

Dès lors, s'il est procédé, suivant les mêmes modalités que précédemment, à une dépose du châssis 12, les supports de bornier 23 restent en place sur l'embase 11, comme représenté pour l'un d'eux sur la figure 10, et il en est donc de même des borniers 13 qu'il portent.

## Revendications

1. Support pour appareillage électrique, du genre comportant une embase (11), un châssis (12), qui est rapporté de manière amovible sur l'embase (11), et qui est propre à recevoir un appareillage électrique, et au moins un bornier (13), qui, solidaire, directement ou indirectement, de l'embase (11), est destiné à constituer une interface de câblage pour un tel appareillage électrique, **caractérisé en ce que** le bornier (13) est rapporté sur au moins un support de bornier (23), qui est inséré entre le châssis (12) et l'embase (11), et **en ce que** des moyens de fixation (M) sont prévus pour permettre, au choix, d'assujettir ce support de bornier (23) au châssis (12), ou de l'assujettir à l'embase (11).

2. Support suivant la revendication 1, **caractérisé en ce que** les moyens de fixation (M) comportent, en correspondance l'un avec l'autre, sur le châssis (12), un perçage (31), et, sur le support de bornier (23), une cheminée (32), pour l'implantation éventuelle d'un organe de fixation (33), qui, prenant appui sur le châssis (12), permet d'assujettir ce support de bornier (23) à ce châssis (12).

3. Support suivant la revendication 2, **caractérisé en ce qu'**un nervure oblique (42) est adossée à la cheminée (32) du support de bornier (23).

4. Support suivant l'une quelconque des revendications 1 à 3, **caractérisé en ce que** les moyens de fixation (M) comportent, en correspondance, successivement, les uns avec les autres, sur le châssis (12), un évidement (35), sur le support de bornier (23), un perçage (36), et, sur l'embase (11), une cheminée (37), pour l'implantation éventuelle d'un organe de fixation (38), qui, traversant librement le châssis (12) et prenant appui sur le support de bornier (23), permet d'assujettir ce support de bornier (23) à l'embase (11).

5. Support suivant l'une quelconque des revendications 1 à 4, **caractérisé en ce que** le châssis (12) présente au moins une lumière (46), qui, établie en correspondance avec une cheminée (47) de l'embase (11), permet le passage d'un organe de fixation (48) apte à assurer son assujettissement à cette embase (11).

6. Support suivant la revendication 5, **caractérisé en ce que** la lumière (46) du châssis (12) présente, localement, un élargissement (50) ayant transversalement une dimension supérieure à celle de l'organe de fixation (48) associé.

7. Support suivant l'une quelconque des revendications 1 à 6, **caractérisé en ce que** des moyens de centrage sont prévus entre le support de bornier (23) et l'embase (11).

8. Support suivant la revendication 7, **caractérisé en ce que** les moyens de centrage prévus entre le support de bornier (23) et l'embase (11) comportent, sur le support de bornier (23), un évidement (40), et, sur l'embase (11), une collerette (43) sur laquelle le support de bornier (23) peut être emboîté par son évidement (40).

9. Support suivant l'une quelconque des revendications 1 à 8, **caractérisé en ce que** des moyens d'indexation sont prévus entre le châssis (12) et le support de bornier (23).

10. Support suivant la revendication 9, **caractérisé en ce que** les moyens d'indexation prévus entre le châssis (12) et le support de bornier (23) comportent, sur le châssis (12), au moins un trou (44), et, sur le support de bornier (23), au moins un ergot (45) sur lequel le châssis (12) peut être engagé par son trou (44).

11. Support suivant l'une quelconque des revendications 1 à 10, **caractérisé en ce que** le support de bornier (23) comporte une patte (24), sur laquelle intervient le châssis (12), et un pilier (25), qui est propre à recevoir au moins un bornier (13).

12. Support suivant la revendication 11, **caractérisé en ce que** le pilier (25) est apte à recevoir au moins deux borniers (13).

13. Support suivant l'une quelconque des revendications 1 à 12, **caractérisé en ce qu'**il y a un support de bornier (23) à chacune des extrémités du ou des borniers (13).

14. Support suivant l'une quelconque des revendications 1 à 13, **caractérisé en ce que**, le châssis (12) comportant deux longerons (19) reliés l'un à l'autre par au moins une traverse (20), chacun des longerons (19) est agencé de manière identique à chacune de ses extrémités (21).

## Claims

1. A support for an item of electrical equipment of the kind comprising a base (11), a chassis (12) which is fitted removably to the base (11) and which is capable of receiving an item of electrical equipment, and at least one terminal array (13) which fixed directly or indirectly with respect to the base (11) is intended to constitute a wiring interface for such an item of electrical equipment, **characterised in that** the terminal array (13) is fitted on at least one terminal array support (23) which is inserted between the chassis (12) and the base (11), and that fixing means (M) are provided for selectively permitting said terminal array support (23) to be fixed to the chassis (12) or to be fixed to the base (11).

2. A support according to claim 1 **characterised in that** the fixing means (M) comprise in mutually corresponding relationship an aperture (31) on the chassis (12) and a sleeve (32) on the terminal array support (23) for the possible fitment of a fixing member (33) which, bearing against the chassis (12), permits said terminal array support (23) to be secured to said chassis (12).

3. A support according to claim 2 **characterised in that** an inclined rib (42) is disposed in backing relationship with the sleeve (32) of the terminal array support (23).

4. A support according to any one of claims 1 to 3 **characterised in that** the fixing means (M) comprise in successive mutually corresponding relationship an opening (35) on the chassis (12), an aperture (36) on the terminal array support (23) and a sleeve (37) on the base (11) for the possible fitment of a fixing member (38) which, passing freely through the chassis (12) and bearing against the terminal array support (23), permits said terminal array support (23) to be secured to the base (11).

5. A support according to any one of claims 1 to 4 **characterised in that** the chassis (12) has at least one slot (46) which, provided in corresponding relationship with a sleeve (47) of the base (11), permits a fixing member (48) to pass therethrough, capable of providing for securing it to said base (11).

6. A support according to claim 5 **characterised in that** the slot (46) in the chassis (12) locally has an enlarged portion (50) which transversely is of a dimension greater than that of the associated fixing member (48).

7. A support according to any one of claims 1 to 6 **characterised in that** centering means are provided between the terminal array support (23) and the base (11).

8. A support according to claim 7 **characterised in that** the centering means provided between the terminal array support (23) and the base (11) comprise an opening (40) on the terminal array support (23) and on the base (11) a flange portion (43) on which the terminal array support (23) can be engaged by way of its opening (40).

9. A support according to any one of claims 1 to 8 **characterised in that** indexing means are provided between the chassis (12) and the terminal array support (23).

10. A support according to claim 9 **characterised in that** the indexing means provided between the chassis (12) and the terminal array support (23) comprise at least one hole (44) on the chassis (12) and on the terminal array support (23) at least one lug (45) on which the chassis (12) can be engaged by way of its hole (44).

11. A support according to any one of claims 1 to 10 **characterised in that** the terminal array support (23) comprises a lug portion (24) on which the chassis (12) is operatively disposed and a column (25) which is capable of receiving at least one terminal array (13).

12. A support according to claim 11 **characterised in that** the column (25) is capable of receiving at least two terminal arrays (13).

13. A support according to any one of claims 1 to 12 **characterised in that** there is a terminal array support (23) at each of the ends of the terminal array or arrays (13).

14. A support according to any one of claims 1 to 13 **characterised in that**, the chassis (12) comprising two longitudinal members (19) which are connected together by at least one transverse member (20), each of the longitudinal members (19) is arranged in identical manner at each of its ends (21).

## Patentansprüche

1. Trägervorrichtung für elektrische Geräte, von der Art mit einem Sockel (11), einem Gestell (12), das abnehmbar auf dem Sockel (11) aufgesetzt ist und ein elektrisches Gerät aufzunehmen vermag, und wenigstens einer Klemmleiste (13), die, mit dem Sockel (11) direkt oder indirekt fest verbunden, dazu bestimmt ist, für ein derartiges elektrisches Gerät eine Verdrahtungsschnittstelle zu bilden,
**dadurch gekennzeichnet, dass** die Klemmleiste (13) auf wenigstens eine Klemmleistenhalterung (23) aufgesetzt ist, die zwischen dem Gestell (12) und dem Sockel (11) eingefügt ist, und dass Befestigungsmittel (M) vorgesehen sind, um die Klemmleistenhalterung (23) wahlweise am Gestell (12) oder am Sockel (11) zu befestigen.

2. Trägervorrichtung nach Anspruch 1,
**dadurch gekennzeichnet, dass** die Befestigungsmittel (M) in gegenseitiger Übereinstimmung auf dem Gestell (12) eine Bohrung (31) und auf der Klemmleistenhalterung (23) einen Kanal (32) zur eventuellen Anbringung eines Befestigungsorgans (33) aufweisen, welches das Befestigen der Klemmleistenhalterung (23) auf dem Gestell (12) erlaubt, indem es an dem Gestell (12) zur Anlage kommt.

3. Trägervorrichtung nach Anspruch 2,
**dadurch gekennzeichnet, dass** eine schräge Rippe (42) an dem Kanal (32) der Klemmleistenhalterung (23) anliegt.

4. Trägervorrichtung nach einem der Ansprüche 1 bis 3,
**dadurch gekennzeichnet, dass** die Befestigungsmittel (M) in gegenseitiger Übereinstimmung aufeinanderfolgend auf dem Gestell (12) eine Aussparung (35), auf der Klemmleistenhalterung (23) eine Bohrung (36) und auf dem Sockel (11) einen Kanal (37) aufweisen, zur eventuellen Anbringung eines Befestigungsorgans (38), welches, das Gestell (12) ungehindert durchquerend und an der Klemmleistenhalterung (23) anliegend, das Befestigen der Klemmleistenhalterung (23) an dem Sockel (11) erlaubt.

5. Trägervorrichtung nach einem der Ansprüche 1 bis 4,
**dadurch gekennzeichnet, dass** das Gestell (12) wenigstens einen Schlitz (46) aufweist, der, mit einem Kanal (47) des Sockels (11) übereinstimmend angeordnet, das Hindurchführen eine Befestigungsorgans (48) erlaubt, das dessen Befestigung an dem Sockel (11) zu gewährleisten vermag.

6. Trägervorrichtung nach Anspruch 5,
**dadurch gekennzeichnet, dass** der Schlitz (46) des Gestells (12) lokal eine Erweiterung (50) aufweist, die im Querschnitt eine größere Abmessung hat als das zugeordnete Befestigungsorgan (48).

7. Trägervorrichtung nach einem der Ansprüche 1 bis 6,
**dadurch gekennzeichnet, dass** Zentriermittel zwischen der Klemmleistenhalterung (23) und dem Sockel (11) vorgesehen sind.

8. Trägervorrichtung nach Anspruch 7,
**dadurch gekennzeichnet, dass** die zwischen der Klemmleistenhalterung (23) und dem Sockel (11) vorgesehenen Zentriermittel auf der Klemmleistenhalterung (23) eine Ausnehmung (40) und auf dem Sockel (11) einen Kragen (43) aufweisen, auf den die Klemmleistenhalterung (23) mit ihrer Ausnehmung (40) gesteckt werden kann.

9. Trägervorrichtung nach einem der Ansprüche 1 bis 8,
**dadurch gekennzeichnet, dass** Positioniermittel zwischen dem Gestell (12) und der Klemmleistenhalterung (23) vorgesehen sind.

10. Trägervorrichtung nach Anspruch 9,
**dadurch gekennzeichnet, dass** die zwischen dem Gestell (12) und der Klemmleistenhalterung (23) vorgesehenen Positioniermittel auf dem Gestell (12) wenigstens ein Loch (44) und auf der Klemmleistenhalterung (23) wenigstens einen Vorsprung (45) aufweisen, auf den das Gestell (12) mit seinem Loch (44) gesteckt werden kann.

11. Trägervorrichtung nach einem der Ansprüche 1 bis 10,
**dadurch gekennzeichnet, dass** die Klemmleistenhalterung (23) einen Fuß (24), auf dem das Gestell (12) angeordnet ist, und einen Pfosten (25) aufweist, der wenigstens eine Klemmleiste (13) aufzunehmen vermag.

12. Trägervorrichtung nach Anspruch 11,
**dadurch gekennzeichnet, dass** der Pfosten (25) wenigstens zwei Klemmleisten (13) aufzunehmen vermag.

13. Trägervorrichtung nach einem der Ansprüche 1 bis 12,
**dadurch gekennzeichnet, dass** an jedem Ende der Klemmleiste(n) (13) eine Klemmleistenhalterung (23) vorhanden ist.

14. Trägervorrichtung nach einem der Ansprüche 1 bis 13,
**dadurch gekennzeichnet, dass** das Gestell (12) zwei Längsträger (19) umfasst, die miteinander durch wenigstens einen Querträger (20) verbunden sind, wobei jeder der Längsträger (19) an jedem seiner Enden (21) in gleicher Weise ausgebildet ist.
